(19) Europäisches Patentamt
European Patent Office
Office européen des brevets

(11) **EP 4 198 448 A1**

(12) **EUROPEAN PATENT APPLICATION**

(43) Date of publication:
**21.06.2023 Bulletin 2023/25**

(21) Application number: **22208386.7**

(22) Date of filing: **18.11.2022**

(51) International Patent Classification (IPC):
**G01B 21/04** (2006.01)     **G01B 11/06** (2006.01)
**B23K 26/03** (2006.01)     **B23K 26/70** (2014.01)
**B23K 26/38** (2014.01)

(52) Cooperative Patent Classification (CPC):
**G01B 21/042; B23K 26/032; B23K 26/38;
B23K 26/702; G01B 11/0608**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2021 CN 202111530749**

(71) Applicant: **Shenzhen Snapmaker Technologies
Co., Ltd.
Shenzhen, Guangdong 518000 (CN)**

(72) Inventors:
• **ZHONG, Zhongpeng**
  **Shenzhen, 518000 (CN)**
• **LONG, Fengming**
  **Shenzhen, 518000 (CN)**
• **ZHANG, Bin**
  **Shenzhen, 518000 (CN)**
• **WU, Zilin**
  **Shenzhen, 518000 (CN)**
• **CHEN, Zheyong**
  **Shenzhen, 518000 (CN)**

(74) Representative: **Monteiro Alves, Inês
Alameda Dos Oceanos, № 41K-21
Parque das Nações
1990-207 Lisboa (PT)**

(54) **SYSTEM AND METHOD FOR CALIBRATING LASER PROCESSING PARAMETERS**

(57) The present disclosure discloses a system and a method for calibrating laser processing parameters. The method comprises: positioning the laser module at a first height from the work platform, and capturing with the camera module an image of a first light spot projected on the work platform by the visible-light emitter to obtain a first position data of the first light spot on an image plane of a lens of the camera module at the first height; positioning the laser module at a second height from the work platform different from the first height, and capturing with the camera module an image of a second light spot projected on the work platform by the visible-light emitter to obtain a second position data of the second light spot on an image plane at the second height; and obtaining a conversion formula of an actual distance hx from the laser module to a surface of the material to be processed which is placed on the work platform according to theorem of similar triangles, and plugging the first and second position data into the conversion formula.

FIG. 2

**Description**

This application claims priority of Chinese application No. 202111530749.3, filed on December 14, 2021 and entitled "System and method for calibrating laser processing parameters", the entire content of which is incorporated herein by reference.

**TECHNICAL FIELD**

The present disclosure relates to the field of laser processing, in particular to a system and a method for calibrating laser processing parameters.

**RELATED ART**

Laser processing technology, especially laser cutting technology, is mainly used in industrial applications. In industrial applications, it is often necessary to use a camera to capture images and obtain laser cutting parameters. Therefore, how to obtain laser cutting parameters accurately plays an extremely critical and important role in the precision of laser cutting.

In recent years, the development of consumer or desktop laser cutting device has been increasingly recognized and concerned by the market. Because of its application scenarios, consumer or desktop laser cutting device often needs to be miniaturized, portable, and easy to operate. However, currently, the acquisition of laser cutting parameters of most laser cutting device is complicated, and the device requires excessive manual intervention, has low precision, which restricts the application of consumer or desktop laser cutting device in particular.

CN112513562A discloses a measuring device for determining the distance (1) between a processing head (101) for a laser machining system (100) and a workpiece (1), the processing head (101) being configured to process the workpiece (1) with a laser beam (10). The measuring device comprises an optical coherence tomograph (120) to measure the distance between the processing head (101) and the workpiece (1), wherein measuring light (13) generated by a measuring light source in the optical coherence tomograph (120) and reflected by the workpiece (1) interferes with measuring light reflected in a reference arm (200, 300) with two or more reference stages. The two or more reference stages include a first reference stage (210) configured such that the measuring light reflected therein travels a first optical path length, and a second reference stage (220) configured such that the measuring light reflected therein travels a second optical path length different from the first length, wherein the measuring light reflected by the workpiece interferes with reflected measuring light of the first reference stage (210) and reflected measuring light of the second reference stage (220).

US20180150047A1 discloses a method for calibrating a computer-numerically-controlled machine, including capturing one or more images of at least a portion of the computer-numerically-controlled machine. The one or more images can be captured with at least one camera located inside an enclosure containing a material bed. A mapping relationship can be created which maps a pixel in the one or more images to a location within the computer-numerically controlled machine. The creation of the mapping relationship can include compensating for a difference in the one or more images relative to one or more physical parameters of the computer-numerically-controlled machine and/or a material positioned on the material bed. Related systems and/or articles of manufacture, including computer program products, are also provided. Mapping, based on the mapping relationship, a pixel coordinate in the one or more images to a location coordinate in the computer-numerically-controlled machine; converting an instruction corresponding to the pixel coordinate to a command for execution at the location, the conversion based at least on the mapping of the pixel coordinate in the one or more images to the location coordinate in the computer-numerically-controlled machine; and executing the command as part of a motion plan for the computer-numerically-controlled machine.

CN108846819A discloses a method for obtaining laser cutting parameters, including: with the purpose of laser cutting materials by laser cutting device, triggering the laser cutting device to filter the ambient light by sensing ambient light; obtaining a captured image under the filtered ambient light, the captured image including a cutting material and a collection point used to assist in measuring the thickness of the cutting material; calculating thickness of the cutting material according to the position information of the collection point on the captured image; obtaining laser cutting parameters corresponding to the thickness of the cutting material from predetermined laser cutting parameters, the laser cutting parameters used to perform the laser cutting of the cutting material by the laser cutting device. The cutting material can be precisely cut with accurate laser cutting parameters by using such method. By performing ambient light sensing to trigger the laser cutting device to filter the ambient light, the problem of stray light in the captured image can be effectively prevented, so that the laser cutting device can obtain the accurate location information of the collection point from the captured image, so that obtain accurate laser cutting parameters for precise cutting of cutting materials based on the accurate position information of the collection point.

There is a need in the art to develop a technology that can calibrate and obtain laser cutting parameters automatically, so that the device can be operated easily, and at the same time, the accuracy of the laser cutting parameters can be obtained, thereby ensuring the laser cutting precision.

There is a need for improved technologies in the art to alleviate or overcome the above-mentioned technical deficiencies, as well as to obtain other beneficial technical effects.

The information included in the Background section of the present specification, including any references cited herein and any description or discussion thereof, is included for technical reference purposes only and is not to be regarded as limiting subject of the scope of the present disclosure.

## SUMMARY

The present disclosure has been made in view of the above and other further concepts.

According to the concept of one aspect of the present disclosure, it is intended to provide a method for calibrating laser processing device, the laser processing device comprises: a laser module for laser processing; a work platform for placing a material to be processed; and a visible-light emitter and a camera module assembled with the laser module, the method comprises the following steps: S1: positioning the laser module at a first height from the work platform, and capturing with the camera module an image of a first light spot projected on the work platform by the visible-light emitter to obtain a first position data of the first light spot on an image plane of a lens of the camera module at the first height; S2: positioning the laser module at a second height from the work platform different from the first height, and capturing with the camera module an image of a second light spot projected on the work platform by the visible-light emitter to obtain a second position data of the second light spot on an image plane at the second height; and S3: obtaining a conversion formula of an actual distance hx from the laser module to a surface of the material to be processed which is placed on the work platform according to theorem of similar triangles, and plugging at least the first and second position data into the conversion formula.

According to an embodiment of the present disclosure, the step S1 comprises: moving the laser module to the first height, h1 from the work platform in the z-axis direction, and capturing with the camera module a first light spot position O1 projected on the work platform by the visible light emitted by the visible-light emitter, to obtain a distance s1' from an image point O1' corresponding to the first light spot position O1 on the image plane to a vertical line at the center of the lens of the camera module; the step S2 comprises: moving the laser module to the second height, h2 from the work platform in the z-axis direction without changing the x-axis and y-axis coordinate parameters of the laser module, and capturing with the camera module a second light spot position O2 projected on the work platform by the visible light emitted by the visible-light emitter, to obtain a distance s2' from an image point O2' corresponding to the second light spot position O2 on the image plane to the vertical line at the center of the lens of the camera module; the step S3 comprises: plugging data of the first height h1, the second height h2, the distance s1' and the distance s2' into the conversion formula of the actual distance hx obtained according to theorem of similar triangles.

According to another embodiment of the present disclosure, the visible-light emitter and the camera module are both assembled with the laser module.

According to another embodiment of the present disclosure, the visible-light emitter and the camera module are at the same height level.

According to another embodiment of the present disclosure, the method further comprises a step for obtaining laser processing parameters after calibration:

S4: placing the material to be processed on the work platform of the laser processing device, and capturing with the camera module the light spot projected on the surface of the material to be processed which is placed on the work platform by the visible-light emitter at the first height h1 from the work platform, to obtain a distance sx' from the image point imaged on the image plane by the light spot projected on the material to be processed by the visible-light emitter to the vertical line at the center of the lens of the camera module;
S5: calculating the actual distance hx by using the conversion formula.

According to another embodiment of the present disclosure, the step S5 further comprises: obtaining a thickness T of the material to be processed by the following formula: T = h1-hx.

According to another embodiment of the present disclosure, the method further comprises a step S6 for verifying the calibration: placing a verification material with a known thickness on the work platform for thickness measurement, and comparing the thickness obtained by the camera module with the known thickness, and when the ratio of (measured thickness - known thickness) / known thickness is within a predetermined threshold, the verification is passed; otherwise, the verification is failed.

According to another embodiment of the present disclosure, the method further comprises a step S7 for obtaining a zero point for distance measurement: moving the laser module relative to the work platform to abut the work platform, and recording a z-axis height coordinate value when the laser module abuts the work platform.

According to another embodiment of the present disclosure, the method further comprises a step S8: measuring and/or storing the empirical deviation values δ of various materials, whereby the thickness of the material to be processed is T = h1-hx+δ.

According to another embodiment of the present disclosure, the actual distance hx is obtained by the following formula:

$$hx = (h3 * s1' + [(s2' * h2) - (s1' * h1)]) / (h3 * sx' + [(s2' * h2) - (s1' * h1)]) * h1,$$

wherein h3 = h1-h2.

According to another embodiment of the present disclosure, one or more of the steps S1-S8 are performed automatically by the laser processing device.

According to another embodiment of the present disclosure, the method further comprises a step of lowering camera exposure value of the camera module to a set value before the camera module photographs.

Another aspect of the present disclosure also provides an automatic control system of laser processing device, the laser processing device comprises: a laser module for laser processing; a work platform for placing a material to be processed; a visible-light emitter and a camera module assembled with the laser module, the automatic control system comprises a processor and a memory, and a linear module configured to drive the laser module and the work platform to move relative to each other in x, y and z-axis direction, the processor is programmed to perform the following steps automatically: S1: driving the linear module to position the laser module at a first height from the work platform, and capturing with the camera module an image of a first light spot projected on the work platform by the visible-light emitter to obtain a first position data of the first light spot on an image plane of a lens of the camera module at the first height; S2: driving the linear module to position the laser module at a second height from the work platform different from the first height, and capturing with the camera module an image of a second light spot projected on the work platform by the visible-light emitter to obtain a second position data of the second light spot on an image plane at the second height; and, S3: storing in the memory a conversion formula of an actual distance hx from the laser module to a surface of the material to be processed which is placed on the work platform obtained according to theorem of similar triangles.

According to an embodiment of the present disclosure, the step S1 comprises: moving the laser module to the first height, h1 from the work platform in the z-axis direction, and capturing with the camera module a first light spot position O1 projected on the work platform by the visible light emitted by the visible-light emitter, to obtain a distance s1' from an image point O1' corresponding to the first light spot position O1 on the image plane to a vertical line at the center of the lens of the camera module; the step S2 comprises: moving the laser module to the second height, h2 from the work platform in the z-axis direction without changing the x-axis and y-axis coordinate parameters of the laser module, and capturing with the camera module a second light spot position O2 projected on the work platform by the visible light emitted by the visible-light emitter, to obtain a distance s2' from an image point O2' corresponding to the second light spot position O2 on the image plane to a vertical line at the center of the lens of the camera module; the step S3 comprises: plugging data of the first height h1, the second height h2, the distance s1' and the distance s2' into the conversion formula of the actual distance hx obtained according to theorem of similar triangles.

According to another embodiment of the present disclosure, the visible-light emitter and the camera module are both assembled with the laser module, and the visible-light emitter and the camera module are at the same height level.

According to another embodiment of the present disclosure, the processor is programmed to further perform automatically the step for obtaining laser processing parameters after calibration:

S4: placing the material to be processed on the work platform of the laser processing device, and capturing with the camera module the light spot projected on the surface of the material to be processed which is placed on the work platform by the visible-light emitter at the first height h1 from the work platform, to obtain a distance sx' from the image point imaged on the image plane by the light spot projected on the material to be processed by the visible-light emitter to the vertical line at the center of the camera lens; and

S5: calculating the actual distance hx by the conversion formula, and obtaining a thickness T of the material to be processed by the following formula: T = h1-hx.

According to another embodiment of the present disclosure, the automatic control system is configured to further perform a verification step S6: placing a verification material with a known thickness on the work platform for thickness measurement, and comparing the thickness obtained by the camera module with the known thickness, and when the ratio of (measured thickness - known thickness) / known thickness is within a predetermined threshold, the verification is passed; otherwise, the verification is failed.

According to another embodiment of the present disclosure, the processor is programmed to further perform a step S7 for obtaining a zero point for distance measurement: moving the laser module relative to the work platform to abut the work platform, and recording a z-axis height coordinate value when the laser module abuts the work platform.

According to another embodiment of the present disclosure, the automatic control system is configured to further perform a step S8: measuring and/or storing empirical deviation value δ of various materials, whereby the thickness of the material to be processed is T= h1-hx+δ.

According to another embodiment of the present disclosure, the actual distance hx is obtained by the following formula:

$$hx = (h3 * s1' + [(s2' * h2) - (s1' * h1)]) / (h3 * sx' + [(s2' * h2) - (s1' * h1)]) * h1,$$

wherein h3 = h1-h2.

According to another embodiment of the present disclosure, the automatic control system further comprises a sensor for sensing ambient brightness, wherein when the ambient brightness sensed by the sensor does not meet a predetermined brightness threshold, the automatic control system controls the linear module to drive the laser module to move to a position that meets the predetermined brightness threshold.

The present disclosure also provides the laser processing device comprises: a laser module for laser processing; a work platform for placing a material to be processed; and a visible-light emitter and a camera module assembled with the laser module, and the above-mentioned automatic control system.

Laser processing device can be desktop or consumer laser processing device, such as laser cutting device.

According to another embodiment, an automatic control system for a laser processing device comprises a sensor that senses ambient brightness.

According to another embodiment, a laser module of a laser processing device comprises a high-power laser head.

The calibration technology of the present disclosure can reduce not only the mechanical/assembly errors of laser processing device such as 3D printers, but also errors caused by the surrounding environment itself, such as measurement errors caused by light reflections/surface textures/surrounding ambient light. Automated calibration steps also provide operator convenience, increased reliability, and simplified operational procedures. These are the beneficial technical advantages that the present disclosure can bring.

More embodiments of the present disclosure can also achieve other advantageous technical effects that are not listed one by one. These other technical effects may be partially described below, and can be expected and understood after reading the present disclosure by those skilled in the art.

## BRIEF DESCRIPTION OF DRAWINGS

The above-described and other features and advantages of these embodiments, and the manner in which they are achieved, will be more apparent, and embodiments of the present disclosure may be better understood, by reference to the following description in conjunction with the accompanying drawings, in which:

FIG. 1 schematically shows a laser module for calibrating laser processing device and a visible-light emitter and a camera module installed thereon according to an embodiment of the present disclosure.
Fig. 2 schematically shows theorem of similar triangles and part of the device used for calibrating laser processing device according to an embodiment of the present disclosure;
FIG. 3 schematically shows a part of an exemplary flow of calibrating a laser processing device according to an embodiment of the present disclosure.

## DETAILED DESCRIPTION

The details of one or more embodiments of the invention are set forth in the accompanying drawings and the detailed description below. Other features, purposes and advantages of the present disclosure will be apparent from the description, drawings and claims.

It should be understood that the illustrated and described embodiments are not limited in application to the details of construction and the arrangement of components set forth in the following description or illustrated in the accompanying drawings. The illustrated embodiments can be other embodiments and can be implemented or carried out in various ways. The examples are provided by way of explanation of the disclosed embodiments and not by way of limitation. In fact, it will be apparent to those skilled in the art that various modifications and variations can be made in various embodiments of the present disclosure without departing from the scope or spirit of the present disclosure. For example, features illustrated or described as part of one embodiment can be used with another embodiment to still yield a further embodiment. Accordingly, the present disclosure covers such modifications and variations as fall within the scope of the appended claims and their equivalents.

Also, it is to be understood that the phrases and wordings used herein is for the purpose of description and should not be regarded as limiting. The use of "including", "comprising" or "having" and variations thereof herein is intended to be open-ended to include the items listed thereafter and their equivalents as well as additional items.

In this application, the term "cutting" may generally refer to altering the appearance, properties and/or morphology of a material. Cutting may include, for example, laser cutting, engraving, burning, laser ablation, and the like. "Carving" as used in this application means the process by which three-dimensional automated device changes the appearance of a material without cutting through it. For example, for a laser cutting machine, it can mean removing some material from a surface, or discoloring a material by applying electromagnetic radiation, etc.

In this application, the term "processing" includes processes involving processing, treating, etc. with a laser, including the above-mentioned "cutting", for example, including the process steps of 3D print using a laser.

In this application, the term "laser" includes any electromagnetic radiation or focused or coherent energy source (in the case of a cutting tool) that uses photons to cause some change or alteration to a substrate or material. The laser can be of any desired wavelength, including, for example, microwaves, lasers, infrared lasers, visible lasers, UV lasers, X-ray lasers, gamma-ray lasers, and the like.

In this application, the term "visible light" includes light in any wavelength range recognizable by the naked eye and photographed by a camera.

Also, as used herein, unless otherwise stated, the term "material" is a material or object that can be laser-machined on a platform of a three-dimensional automated device. If the 3D automated device is a laser cutting machine, the material is an object or workpiece to be cut, such as raw materials, etc., placed on the platform of the 3D automated device.

As used herein, the terms "installed", "connected", "linked", "fixed" and the like should be interpreted broadly, for example, it may be a fixed connection, a detachable connection, or an integral connection; it may be a mechanical connection, an electrical connection, a direct connection, or an indirect connection through an intermediate medium, and an internal connection between two components. For those skilled in the art, the specific meanings of the above terms in this document can be understood according to specific situations.

The present disclosure will be described in more detail below with reference to specific embodiments of the present disclosure.

The theorem of "similar triangles" is applied in the measurement technique of the present disclosure. "Similar triangles" refer to two triangles whose corresponding angles are equal and whose corresponding sides are proportional. If a straight line parallel to one side of the triangle cuts the other two sides of the triangle or the extension line where the other two sides (positive/reverse extension) is located, the truncated triangle is similar to the original triangle. The corresponding angles of a similar triangle are equal to the original triangle, and the corresponding sides are proportional, having equal ratios.

In the calibration/measurement technique of the present disclosure, the theorems and properties of parallel lines in Euclidean geometry may also be used. The relationship between angles obtained from parallel lines can be regarded as the property of parallel lines, including: (1) if two straight lines are parallel, the corresponding angles are equal; (2) if two straight lines are parallel, the alternate angles are equal; (3) if two straight lines are parallel, the interior angles on the same side are complementary.

The present disclosure will be further described below with reference to the accompanying drawings.

In a mass-produced laser cutting machine suitable for 3D manufacturing, for example, it is difficult to maintain a good consistency between the visible-light emitters, the cameras and the relative positions and angles between them. If good consistency cannot be maintained, it will affect the measurement and processing accuracy of the laser cutting machine. Therefore, calibration is required.

In this regard, in order to improve the yield and reliability of mass production, a step for calibrating processing parameters of a laser processing device such as a laser cutting machine is provided according to an aspect of the present disclosure. In this way, for example, in regard for different laser heads of a laser cutting machine, actual parameters such as the relative position and angle of the camera and the visible-light emitter can be obtained by this calibration, and then the thickness of the material to be processed can be calculated.

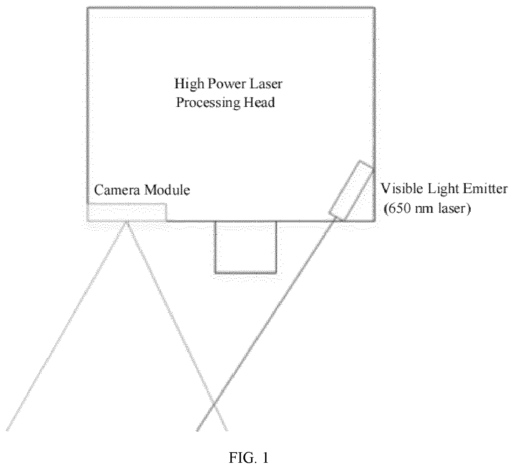

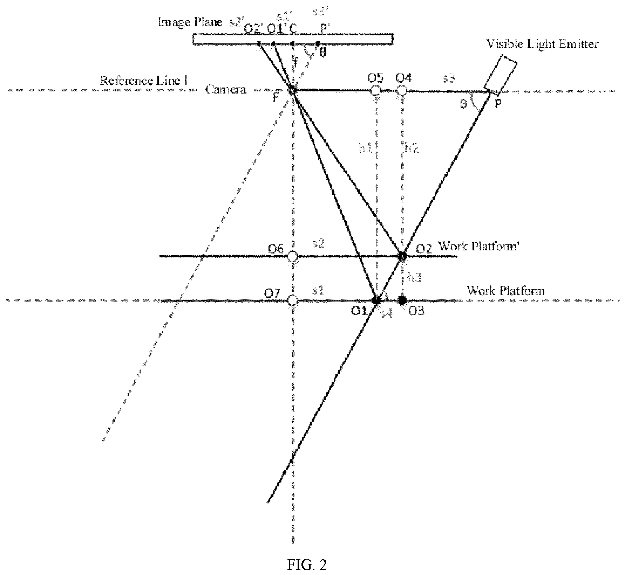

As shown in FIG. 1, in the laser module of the laser processing device, for example, in the high-power laser module of the 3D printing device, a visible-light emitter, such as the visible light laser emitter with a wavelength of 650 nm shown in FIG. 1, is added. As shown in FIGS. 1-2, the camera module and the visible-light emitter are both integrated/assembled with the laser module and at the same height level. In this way, for example, the visible-light emitter, the camera module, and the visible light spot on the work platform form a similar triangle, of course, with other similar triangles (such as shown in FIG. 2), so that a conversion formula between the pixel coordinates on the image plane of the camera and the actual distance/size can be obtained by the calibration process.

In the subsequent operation process, for workpiece/material with any thickness within the range, after obtaining the coordinate data information of the image point on the image plane corresponding to the visible light spot on the surface of the material to be processed with the camera, the actual distance from the laser module to the upper surface of the material to be processed, and the thickness of the material to be processed are calculated by a formula obtained by the calibration process. In this way, after the above-mentioned actual data is obtained, it can be used for subsequent adjustment/calibration of processing parameters, for example, to complete the compensation of the focal length of the laser module.

According to one embodiment, a laser cutting machine may have a housing that attenuates, filters, and shields the laser light from damage to the user by the high-power laser. The enclosure may also include a top plate, side plates, a bottom support plate, and one or more openings. The opening can be a door or window and can be used by a user to place or remove materials, observe the process of processing, and so on. The laser cutting machine has at least one movable laser head, also referred to as a laser module in this application. The laser head can emit laser for changing the shape and structure of materials, and has an aircooling mechanism for blowing away the heat generated by the laser. In the present application, the laser head may further include a camera module, a visible-light emitter, etc., and the camera module and the visible-light emitter may be assembled to the laser head in a detachable manner or a fixed connection manner. The laser head can move linearly along the x-direction, the y-direction and the z-direction relative to the work platform by means of the linear module.

The laser module and the work platform can move relative to each other in the directions of the x, y and z axes of the Cartesian coordinate system, wherein the x-y plane where the x axis and the y axis are located is parallel to the plane of the work platform, and the z axis is perpendicular to the x-y plane. The "height" and "thickness" mentioned in this application refer to the dimension in the z-axis direction.

The laser cutting machine may have a work platform on which the material to be processed is placed. The work platform should provide a flat working surface. The work platform limits the movement range of the laser module, that is to say, the maximum movement area of the laser module is roughly equal to the area of the work platform. When the material is placed on the work platform and does not exceed the scope of the work platform, the laser module can process the entire material. The work platform can generally be a regular shape such as a square or a rectangle. Since the flatness of the work platform has an important influence on the machining accuracy, the platform plane needs to be adjusted before machining.

Laser cutting machines can have linear modules that can drive in the x-, y-, and z-axis directions. Each linear module is driven with one or more corresponding motors or actuators, so that each linear module can be driven in the direction of the corresponding coordinate axis, and plays the role of controlling the movement path of the laser module of the laser cutting machine in the x-axis, y-axis and z-axis directions during calibration and processing.

When the laser cutting machine is turned on, the images of the work platform are photographed by the camera module, and obtained to display the images on a display. The user can drag the selected processing image into the range of the obtained image of the work platform, and then locate the selected processing image at the selected position. Users can zoom, move, copy, paste, delete and perform other operations on the processed images. After the user has determined the position of the processing image in the obtained image of the work platform, a file is confirmed and generated, and imported into the processing control unit of the control system, for example. The laser cutting machine starts to automatically acquire processing data, which can include, for example, the thickness of the processed material, images of the processed material, surface morphology, and surrounding environment, etc. In addition, the camera module can also be used to monitor processing conditions, record video, and so on.

The control system of the laser cutting machine has a processor and a memory communicatively coupled to it, which can store a mapping relationship between the distance from the camera (e.g., the camera lens) to the upper surface of the work platform and the z-axis reading of the machine; and a mapping relationship between the z-axis reading of the laser cutting machine and the height of the laser module when the laser is focused on the work platform.

The laser cutting machine may also include a sensor for sensing ambient brightness; a memory for storing optimal photographing environment parameters, including but not limited to brightness and the like. When the laser module is located at a certain position, if the sensor senses that the brightness does not meet the predetermined brightness threshold, then the laser module can be automatically moved to a position that meets the predetermined brightness threshold, for example, it can be moved to a height h1 and h2 that meet the brightness requirement.

After the thickness of the material is obtained, the mapping relationship between the distance from the camera lens to the material surface and the z-axis reading of the machine can be obtained, as well as the mapping relationship between the z-axis reading of the machine and the height of the laser module when the laser is focused on the material surface.

After the processing data is obtained, the processing data is imported into the control unit to start processing.

In the process of obtaining parameters with the camera, a piece of blank paper with a thin thickness, for example, can be placed on the platform to facilitate the acquisition of visible light points more clearly (FIG. 2). But blank paper is not always necessary.

The camera and the visible-light emitter can be located on the laser module, as long as the camera can clearly capture the light of the visible-light emitter on the work platform.

According to a preferred example, both the camera and the visible-light emitter can be integrated on the laser module and at the same height level. With this setting, the corresponding parameters can be easily obtained directly. For example, the vertical distance from the visible light to the work platform/material to be processed can be directly used as the vertical distance from the laser module/camera to the work platform/material to be processed. Also, the calculated height of the material to be processed can be directly used to adjust the focal length, as described in detail below.

In the case where the camera is arranged on the laser module, advantageously, the laser module can move up, down, left, and right relative to the work platform, so that the camera can move up, down, left and right accordingly, to capture clear photos. In the laser cutting machine, an image processing unit can also be incorporated to process the images obtained by the camera, and the images can be added, subtracted, etc., so as to obtain clearer photos.

Generally, the processing parameters can be obtained after the camera takes a photo of the visible light spot on the work platform or processing material. In some extreme cases, the camera can acquire multiple photos at the same location, process the photos through the image processing unit, and then obtain the processed photos. The extreme case can include too bright or too dark external lighting, etc., which will affect the environment for taking images.

The steps of a method for calibrating a laser processing device according to an embodiment of the present disclosure will be described in more detail below with reference to FIGS. 1-3.

The parameters are described as follows:

F is the center point of the camera lens;
C is the center point of the image plane;
f is the focal length of the camera lens;
1 is the horizontal line where the lens is located;
P is the position of the visible-light emitter;
P' is the corresponding point of point P in the image plane;
$\theta$ is the angle between the beam and the horizontal line;
O1 is light spot of visible beam on work platform at height h1;
O1' is the image point where O1 is reflected back to the image plane;
O2 is light spot of visible beam on work platform at height h2;
O2' is the image point where O2 is reflected back to the image plane;
h1 is the default distance between the camera and the work platform when taking a first photo;
h2 is the default distance between the camera and the work platform when taking a second photo;
h3 is height difference between h1 and h2;
hx is the actual distance of the laser module from the surface of the material to be processed on the work platform;
sx' is similar to s1' and s2', the distance between the image point imaged on the image plane by the light spot projected by the visible beam on the material to be processed on the work platform and the vertical line at the center of the camera lens, in the actual measurement after calibration;
s1 is the distance from O1 to the vertical line at the center of the camera lens;
s2 is the distance from O2 to the vertical line at the center of the camera lens;
s3 is the distance from P to the vertical line at the center of the camera lens;
s4 is the distance between O2 and O1 on the horizontal line;
s1' is the distance from the image point O1' to the vertical line at the center of the camera lens;
s2' is the distance from the image point O2' to the vertical line at the center of the camera lens;
s3' is distance from P' to the vertical line at the center of the camera lens;
$\delta$ is empirical deviation value of different materials.

As shown in FIGS. 1-3, the steps of an exemplary calibration method are shown:
positioning the laser module at a first height from the work platform, and capturing with the camera module an image of a first light spot projected on the work platform by the visible-light emitter to obtain a first position data of the first light spot on an image plane of a lens of the camera module at the first height; positioning the laser module at a second height from the work platform different from the first height, and capturing with the camera module an image of a second light spot projected on the work platform by the visible-light emitter to obtain a second position data of the second light spot on an image plane at the second height; and obtaining a conversion formula of an actual distance hx from the laser module to a surface of the material to be processed which is placed on the work platform according to theorem of similar triangles, and plugging the first and second position data into the conversion formula.

More specifically, the laser module is kept at the height of h1. Visible light is emitted, and the intersection O1 of the visible light and the work platform is photographed with the camera, recorded and sampled. The laser module is at a height h1 from the platform, and the intersection O1 of the visible light and the work platform is photographed with the camera, recorded and sampled. For example, the visible light emitted by the light emitter on the platform is photographed with the camera to obtain the image plane, to obtain the distance s1' from the image point O1' on the image plane corresponding to the first light spot position O1 to the vertical line at the center of the lens of the camera module.

The laser module is moved to the height of h2, and the intersection O2 of the visible light and the work platform is photographed with the camera, recorded and sampled. For example, without changing the x-axis and y-axis coordinates of the laser module, the laser module is further moved from the height of h1 to the height of h2 from the platform, and the visible light emitted by the visible-light emitter on the platform is photographed with the camera to obtain the distance s2' from the image point O2' on the image plane corresponding to the second light spot position O2 to the vertical line at the center of the lens of the camera module.

The distance between the visible-light emitter and the vertical line at the lens center is calculated.

The distance between the visible-light emitter and the vertical line at the lens center is recorded and stored in the system.

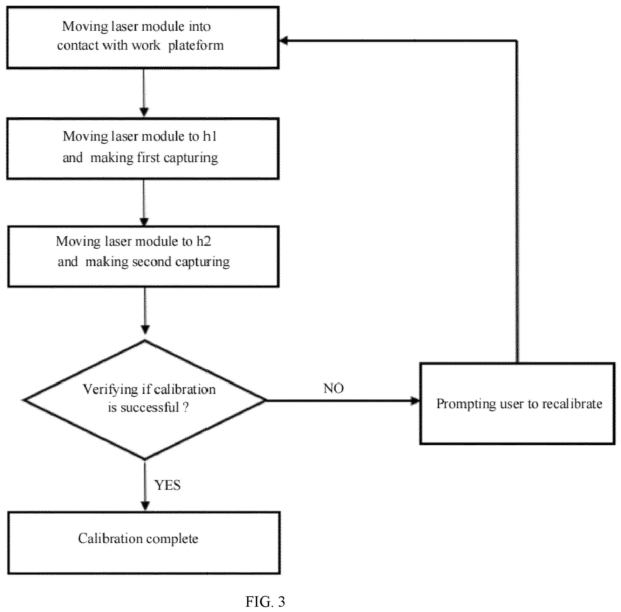

Preferably, after completing the above-mentioned calibration step, a verification step may be further included: after the above-mentioned steps are completed, a calibration cardboard with a known thickness is used for calibration and verification, and when the thickness of the calibration cardboard detected by the system is approximately equal to the standard thickness of the calibration cardboard, the system prompts that the verification has passed, see FIG. 3.

It can also include a step for obtaining the zero point for the distance measurement before and after the above-mentioned calibration step: moving the laser module relative to the work platform to abut the work platform, and recording a z-axis height coordinate value when the laser module abuts the work platform. The step for obtaining the zero point can be performed before or after the calibration step.

After the calibration is completed, the system can be used to measure the thickness of the material to be processed: placing the material to be processed on the work platform, and capturing with the camera module the visible light on the material to be processed at the height h1 from the work platform, to obtain a distance sx' from the image point imaged on the image plane by the light spot projected on the material to be processed by the visible-light emitter to the vertical line at the center of the camera lens; and

calculating the actual distance hx from the laser module to a surface of the material to be processed which is placed on the work platform, and obtaining a thickness T of the material to be processed by the following formula: T = h1-hx.

Since in the actual photographing process, the photographing effect of the camera is greatly affected by the ambient light, in order to obtain the parameters accurately, it may be necessary to improve the recognizability of visible light on the platform or material. Preferably, before the material thickness measurement, the system lowers the exposure value of the camera to a set value, and accurately obtains the position of the visible light on the platform or the material with strong contrast.

Since different materials, such as metal, paper, plastic, etc., have an impact on the measurement accuracy of the distance measurement system, it is preferable that the control system can measure and/or pre-store the empirical deviation value $\delta$ of materials tested with different materials, in order to improve the distance measurement accuracy of the distance measurement system. The corrected thickness of the material to be processed T = h1-hx+$\delta$.

The following shows how to obtain the conversion formula required for the calibration of an embodiment by using theorem of similar triangles and other theorems.

The conversion process is as follows:

a is the known actual size of an object (such as the material to be processed), and a' is the size of the object on the image plane, which can be calculated by pixel units and imaging coordinates. Then, under a fixed height of the laser (i.e., the camera) relative to the material to be processed, the conversion factor between the size of the image plane and the actual size is K, the following equation (1) can be obtained from the similar triangle:

$$K = a' / a \ \text{-----}(1)$$

wherein, h1 is a parameter known by default. Combined with the calculation result of equation (1), the equation (2) of the focal length f can be obtained in the same similar triangle:

$$f = K * h1 \ \text{-----}(2)$$

Assuming that the intersection between the work platform and the vertical line at the lens center at the height of h1 is O7, equation (3) can be obtained:

$$s1 / h1 = s1'/f \ \text{-----}(3)$$

Assuming that the intersection between the work platform and the vertical line at the lens center at the height of h2 is O6, equation (4) can be obtained:

$$s2 / h2 = s2'/f \text{ -----}(4)$$

The distance between 01-02 on the horizontal line is s4, equation (5) can be obtained:

$$s4 = s2 - s1 \text{ ----- } (5)$$

The difference between h1 and h2 on the vertical line is h3, equation (6) and equation (7) can be obtained:

$$h3 = h1 - h2 \text{ -----}(6)$$

$$\tan\theta = h3 / s4 \text{ -----}(7)$$

An auxiliary line is used to find the point P' on the image plane corresponding to the point P. According to tanθ, the distance CP' between the point C and the point P' can be obtained, that is, s3' (as shown in the figure), and the equation (8) and equation (9) can be obtained:

$$s3' = f / \tan \theta \text{ -----}(8)$$

$$s3 = (s1' + s3') * h1 / f \text{ ----- } (9)$$

As above, the calibration is completed.
Using the calibration process, s3, s3', and f are obtained. For any thickness of the material to be processed within the measurement range, the distance hx from the surface of the material to be processed which is placed on the work platform to the camera can be expressed as equation (10) as follows:

$$hx = f * s3 / (s3' + sx') \text{ ----- } (10)$$

The above formula is simplified, and equation (3) and (4) are plugged into equation (5) to obtain equation (11):

$$s4 = [(s2' * h2) - (s1' * h1)] / f \text{ ----- } (11)$$

Plugging (11) into (7) to obtain equation (12):

$$\tan \theta = h3 * f / [(s2' * h2) - (s1' * h1)] \text{ ----- } (12)$$

Plugging equation (12) into (8) to obtain equation (13):

$$s3' = [(s2' * h2) - (s1' * h1)] / h3 \text{ ----- } (13)$$

Plugging (9) into (10) to obtain equation (14):
hx / h1 = (sl' + s3') / (sx' + s3') ----- (14) the ratio between the image plane size and the actual height
Plugging (13) into (14) to obtain equation (15) as follows:

$$hx / h1 = (h3 * s1' + [(s2' * h2) - (s1' * h1)]) / (h3 * sx' + [(s2' * h2) - (s1' * h1)]) \text{ ----- } (15)$$

According to the conversion of the above formula, the equation (16) of hx can be obtained as follows:

$$hx = (h3 * s1' + [(s2' * h2) - (s1' * h1)]) / (h3 * sx' + [(s2' * h2) - (s1' * h1)]) * h1 \; ---- (16).$$

**Calculation of the thickness of the material to be processed**

An example workflow for calculating the thickness of the material to be processed is as follows.

After completing the calibration calculation of the parameters of the distance measurement system, the material to be processed with any thickness within the measurement range can be measured.

The material to be processed is placed into the measurement area of the work platform, and the laser module is moved to the height of h1, and visible light is emitted, and the intersection of the visible light and the surface of the material to be processed is photographed with the camera. The thickness of the material to be processed is calculated.

h1, h2, h3 can be predetermined/or default parameters during calibration, s1', s2' are parameters obtained by the calibration step, and sx' can be calculated from pixel units and imaging coordinates. When calculating the distance hx, the parameter sx' is plugged into equation (16), and the value of hx can be obtained. After the hx is obtained, the thickness T of the material to be processed can be obtained by the above formula (16):

Thickness of material to be processed, $T = h1 - hx = h1 - (h3 * s1' + [(s2' * h2) - (s1' * h1)]) / (h3 * sx' + [(s2' * h1)]) * h1$, wherein $h3 = h1-h2$.

Optionally, the empirical deviation value $\delta$ of the material can be used for correction. The corrected thickness of the material to be processed $T = h1-hx+\delta$.

Based on the above, with the assistance of the camera and the visible-light emitter, the thickness of the material to be processed can be finally obtained, and thus the laser processing parameters are calculated, such as the focal length of the laser can be compensated. After focal length compensation, it is possible to focus automatically and accurately.

The calibration process of the present disclosure can be completely automated without manual intervention, and has strong automation and intelligence compared with manual calibration or semi-automatic calibration on the market.

To this end, the present disclosure provides an automatic control system of laser processing device. The laser processing device includes: a laser module for laser processing; a work platform for placing a material to be processed; a visible-light emitter and a camera module assembled with the laser module, the automatic control system includes a processor and a memory, and a linear module configured to drive the laser module and the work platform to move relative to each other in x, y and z-axis direction, the processor is programmed to perform the following steps automatically:

the step S1: moving the laser module to a first height, h1 from the work platform in the z-axis direction, and capturing with the camera module a first light spot position O1 projected on the work platform by the visible light emitted by the visible-light emitter, to obtain a distance s1' from an image point O1' corresponding to the first light spot position O1 on the image plane to a vertical line at the center of the lens of the camera module; the step S2: moving the laser module to a second height, h2 from the work platform in the z-axis direction without changing the x-axis and y-axis coordinate parameters of the laser module, and capturing with the camera module a second light spot position O2 projected on the work platform by the visible light emitted by the visible-light emitter, to obtain a distance s2' from an image point O2' corresponding to the second light spot position O2 on the image plane to a vertical line at the center of the lens of the camera module; the step S3: storing in the memory a conversion formula of an actual distance hx from the laser module to a surface of the material to be processed which is placed on the work platform obtained according to theorem of similar triangles. The processor is programmed to perform the following steps automatically: plugging data of the first height h1, the second height h2, the distance s1' and the distance s2' into the conversion formula of the actual distance hx obtained according to theorem of similar triangles.

An automatic control system may be used to control the laser processing device to perform any one, more or all of the above-described method steps. For example, the processor of the automatic control system described above can be programmed to perform the following steps automatically:

S1: positioning the laser module to the first height, h1 from the work platform in the z-axis direction, and capturing with the camera module a first light spot position O1 projected on the work platform by the visible light emitted by the visible-light emitter, to obtain a distance s1' from an image point O1' corresponding to the first light spot position O1 on the image plane to a vertical line at the center of the lens of the camera module;

S2: moving the laser module to the second height, h2 from the work platform in the z-axis direction without changing the x-axis and y-axis coordinate parameters of the laser module, and capturing with the camera module a second light spot position O2 projected on the work platform by the visible light emitted by the visible-light emitter, to obtain a distance s2' from an image point O2' corresponding to the second light spot position O2 on the image plane to the vertical line at the center of the lens of the camera module;

S3: plugging data of the first height h1, the second height h2, the distance s1' and the distance s2' into the conversion formula of the actual distance hx obtained according to theorem of similar triangles.

The processor of the automatic control system can be programmed to further perform automatically the step S4 for obtaining the laser processing parameters after the calibration: placing the material to be processed on the work platform of the laser processing device, and capturing with the camera module the light spot projected on the surface of the material to be processed which is placed on the work platform by the visible-light emitter at the first height h1 from the work platform, to obtain a distance sx' from the image point imaged on the image plane by the light spot projected on the material to be processed by the visible-light emitter to the vertical line at the center of the lens of the camera module; and S5: calculating the actual distance hx by using the conversion formula and obtaining a thickness T of the material to be processed by the following formula: T = h1-hx.

The automatic control system can be configured to further perform verification step S6 manually or automatically: placing a verification material with a known thickness on the work platform for thickness measurement, and comparing the thickness obtained by the camera module with the known thickness, and when the ratio of (measured thickness - known thickness) / known thickness is within a predetermined threshold, the verification is passed; otherwise, the verification is failed.

The processor of the automatic control system can be programmed to further automatically perform a step S7 for obtaining a zero point for distance measurement: moving the laser module relative to the work platform to abut the work platform, and recording a z-axis height coordinate value when the laser module abuts the work platform.

The automatic control system may be configured to further perform a step S8 manually or automatically: measuring and/or storing the empirical deviation values $\delta$ of various materials.

The above-mentioned automatic control system can be used to control the laser processing device to perform any one, more or all of the above-mentioned method steps, which will not be described in detail here.

In addition, the automatic control system of the present disclosure may further include a sensor for sensing ambient brightness. When the ambient brightness sensed by the sensor does not meet the predetermined brightness threshold, the automatic control system can control the linear module to drive the laser module to move to a position that meets the predetermined brightness threshold.

The foregoing description of several embodiments of the present disclosure has been presented for purposes of illustration. The foregoing description is not intended to be exhaustive or to limit the invention to the precise steps and/or forms disclosed, obviously many modifications and variations are possible in light of the above teachings. The scope of the invention and all equivalents are intended to be defined by the appended claims.

**Claims**

1. A method for calibrating a laser processing device, the laser processing device comprising a laser module for laser processing, a work platform for placing a material to be processed, and a visible-light emitter and a camera module assembled with the laser module,

   wherein the method is **characterized by** the fact that it comprises steps of:

   S1: positioning the laser module at a first height from the work platform, and capturing with the camera module an image of a first light spot projected on the work platform by the visible-light emitter, to obtain a first position data of the first light spot on an image plane of a lens of the camera module at the first height;
   S2: positioning the laser module at a second height from the work platform different from the first height, and capturing with the camera module an image of a second light spot projected on the work platform by the visible-light emitter, to obtain a second position data of the second light spot on an image plane at the second height; and
   S3: obtaining, according to theorem of similar triangles, a conversion formula of an actual distance hx from the laser module to a surface of the material to be processed which is placed on the work platform, and plugging at least the first and second position data into the conversion formula.

2. The method of claim 1, wherein,

   the step S1 comprises: moving the laser module to the first height, h1 from the work platform in the z-axis direction, and capturing with the camera module a first light spot position O1 projected on the work platform by the visible light emitted by the visible-light emitter, to obtain a distance s1' from an image point O1' corresponding to the first light spot position O1 on the image plane to a vertical line at the center of the lens of the camera module;

the step S2 comprises: moving the laser module to the second height, h2 from the work platform in the z-axis direction without changing the x-axis and y-axis coordinate parameters of the laser module, and capturing with the camera module a second light spot position O2 projected on the work platform by the visible light emitted by the visible-light emitter, to obtain a distance s2' from an image point O2' corresponding to the second light spot position O2 on the image plane to the vertical line at the center of the lens of the camera module; and the step S3 comprises: plugging data of the first height h1, the second height h2, the distance s1' and the distance s2' into the conversion formula of the actual distance hx obtained according to theorem of similar triangles.

3. The method according to claim 1, wherein the visible-light emitter and the camera module are both assembled with the laser module, and the visible-light emitter and the camera module are at the same height level.

4. The method according to claim 2, wherein the method further comprises a step for obtaining laser processing parameters after calibration:

   S4: placing the material to be processed on the work platform of the laser processing device, and capturing with the camera module the light spot projected on the surface of the material to be processed which is placed on the work platform by the visible-light emitter at the first height h1 from the work platform, to obtain a distance sx' from the image point imaged on the image plane by the light spot projected on the material to be processed by the visible-light emitter to the vertical line at the center of the lens of the camera module;
   S5: calculating the actual distance hx by using the conversion formula.

5. The method according to claim 4, wherein the step S5 further comprises: obtaining a thickness T of the material to be processed by the following formula: T = h1-hx.

6. The method according to claim 4 or 5, wherein the method further comprises a step S6 for verifying the calibration: placing a verification material with a known thickness on the work platform for thickness measurement, and comparing the thickness obtained by the camera module with the known thickness, and when the ratio of (measured thickness - known thickness) / known thickness is within a predetermined threshold, the verification is passed; otherwise, the verification is failed.

7. The method according to any one of claims 1-8, wherein the method further comprises a step S7 for obtaining a zero point for distance measurement:
   moving the laser module relative to the work platform to abut the work platform, and recording a z-axis height coordinate value when the laser module abuts the work platform.

8. The method according to any of claims 4-7, wherein the actual distance hx is obtained by the following formula:

$$hx = (h3 * s1' + [(s2' * h2) - (s1' * h1)]) / (h3 * sx' + [(s2' * h2) - (s1' * h1)]) * h1,$$

   wherein h3 = h1-h2.

9. An automatic control system of laser processing device, the laser processing device **characterized by** comprising:

   a laser module for laser processing;
   a work platform for placing a material to be processed;
   a visible-light emitter and a camera module assembled with the laser module,
   wherein the automatic control system comprises a processor and a memory, and a linear module configured to drive the laser module and the work platform to move relative to each other in x, y and z-axis direction, the processor is programmed to perform the following steps automatically:

   S1: driving the linear module to position the laser module at a first height from the work platform, and capturing with the camera module an image of a first light spot projected on the work platform by the visible-light emitter to obtain a first position data of the first light spot on an image plane of a lens of the camera module at the first height;
   S2: driving the linear module to position the laser module at a second height from the work platform different from the first height, and capturing with the camera module an image of a second light spot projected on the work platform by the visible-light emitter to obtain a second position data of the second light spot on an image plane at the second height; and

S3: storing in the memory a conversion formula of an actual distance hx from the laser module to a surface of the material to be processed which is placed on the work platform obtained according to theorem of similar triangles.

10. The automatic control system according to claim 9, wherein,

the step S1 comprises: moving the laser module to the first height, h1 from the work platform in the z-axis direction, and capturing with the camera module a first light spot position O1 projected on the work platform by the visible light emitted by the visible-light emitter, to obtain a distance s1' from an image point O1' corresponding to the first light spot position O1 on the image plane to a vertical line at the center of the lens of the camera module; the step S2 comprises: moving the laser module to the second height, h2 from the work platform in the z-axis direction without changing the x-axis and y-axis coordinate parameters of the laser module, and capturing with the camera module a second light spot position O2 projected on the work platform by the visible light emitted by the visible-light emitter, to obtain a distance s2' from an image point O2' corresponding to the second light spot position O2 on the image plane to a vertical line at the center of the lens of the camera module; the step S3 comprises: plugging data of the first height h1, the second height h2, the distance s1' and the distance s2' into the conversion formula of the actual distance hx obtained according to theorem of similar triangles.

11. The automatic control system according to claim 9 or 10, wherein the visible-light emitter and the camera module are both assembled with the laser module, and the visible-light emitter and the camera module are at the same height level.

12. The automatic control system of claim 10, wherein the processor is programmed to further perform automatically the step for obtaining laser processing parameters after calibration:

S4: placing the material to be processed on the work platform of the laser processing device, and capturing with the camera module the light spot projected on the surface of the material to be processed which is placed on the work platform by the visible-light emitter at the first height h1 from the work platform, to obtain a distance sx' from the image point imaged on the image plane by the light spot projected on the material to be processed by the visible-light emitter to the vertical line at the center of the camera lens; and

S5: calculating the actual distance hx by the conversion formula, and obtaining a thickness T of the material to be processed by the following formula: T = h1-hx.

13. The automatic control system according to claim 12, wherein the method further comprises a step S6 for verifying the calibration:

placing a verification material with a known thickness on the work platform for thickness measurement, and comparing the thickness obtained by the camera module with the known thickness, and when the ratio of (measured thickness - known thickness) / known thickness is within a predetermined threshold, the verification is passed; otherwise, the verification is failed.

14. The automatic control system according to claim 12 or 13, wherein the actual distance hx is obtained by the following formula:

$$hx = (h3 * s1' + [(s2' * h2) - (s1' * h1)]) / (h3 * sx' + [(s2' * h2) - (s1' * h1)]) * h1,$$

wherein h3 = h1-h2.

15. A laser processing device, the laser processing device **characterized by** comprising:

a laser module for laser processing;
a work platform for placing a material to be processed; and
a visible-light emitter and a camera module assembled with the laser module,
wherein, the laser processing device further comprises the automatic control system according to any one of claims 9-14.

High Power Laser
Processing Head

Camera Module

Visible Light Emitter
(650 nm laser)

FIG. 1

FIG. 2

FIG. 3

**EP 4 198 448 A1**

Europäisches
Patentamt
European
Patent Office
Office européen
des brevets

# EUROPEAN SEARCH REPORT

Application Number

EP 22 20 8386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/356252 A1 (VAN DORP ERWIN [NL]) 18 November 2021 (2021-11-18) | 9-14 | INV. G01B21/04 |
| A | * abstract * * paragraph [0028] – paragraph [0036] * * paragraph [0068] – paragraph [0070] * * figure 1 * | 1-8,15 | G01B11/06 B23K26/03 B23K26/70 B23K26/38 |
| A,D | US 2018/150047 A1 (SHAPIRO DANIEL [US]) 31 May 2018 (2018-05-31) * abstract * * paragraph [0062] – paragraph [0139] * * figures 1, 6-15 * | 1-15 | |
| A | US 2013/178972 A1 (GOLDSMITH ABRAHAM M [US] ET AL) 11 July 2013 (2013-07-11) * abstract * * paragraph [0031] – paragraph [0053] * * figures 1-10 * | 1-15 | |

TECHNICAL FIELDS
SEARCHED        (IPC)

G01B
B23K

The present search report has been drawn up for all claims

| Place of search | Date of completion of the search | Examiner |
|---|---|---|
| Munich | 2 May 2023 | Kokkonen, Jukka |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

18

## ANNEX TO THE EUROPEAN SEARCH REPORT
## ON EUROPEAN PATENT APPLICATION NO.

EP 22 20 8386

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2023

| Patent document cited in search report | | Publication date | Patent family member(s) | | | Publication date |
|---|---|---|---|---|---|---|
| US 2021356252 | A1 | 18-11-2021 | CN | 112789479 | A | 11-05-2021 |
| | | | EP | 3861279 | A1 | 11-08-2021 |
| | | | JP | 7076042 | B2 | 26-05-2022 |
| | | | JP | 2022502633 | A | 11-01-2022 |
| | | | US | 2021356252 | A1 | 18-11-2021 |
| | | | WO | 2020069822 | A1 | 09-04-2020 |
| US 2018150047 | A1 | 31-05-2018 | US | 2018150047 | A1 | 31-05-2018 |
| | | | US | 2022057770 | A1 | 24-02-2022 |
| | | | WO | 2018098397 | A1 | 31-05-2018 |
| US 2013178972 | A1 | 11-07-2013 | NONE | | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111530749
- CN 112513562 A

- US 20180150047 A1
- CN 108846819 A